# EUROPEAN PATENT APPLICATION

(11) **EP 4 169 857 A1**
(43) Date of publication of application: **26.04.2023**
(21) Application number: 21203893.9
(22) Date of filing: 21.10.2021
(51) Int. Cl.: B65G 47/86

(54) **GRIPPER FOR HANDLING CONTAINERS ADAPTED TO CONTAIN A POURABLE PRODUCT**

(71) Applicant: Sidel Participations, 76930 Octeville-sur-Mer (FR)
(72) Inventor: MELIOLI, Daniele, 46100 Mantova (IT)
(74) Representative: Sidel Group

(57) **Abstract**

There is described a gripper (4) for gripping at least one container (2) which is adapted to contain a pourable product, the gripper (4) comprising: - a support frame (5), which is fixable to a conveyor (3) of a packaging assembly (1), the assembly being for packaging the pourable product by means of containers (2);- a first arm (6a) and a second arm (6b), which are hinged to the frame (5), to rotate between a closed position, for holding the container (2), and an open position, for releasing the container (2); - a transmission member (12), the transmission member (12) being movably fitted to the frame (5), to translate between a first axial position and a second axial position.

## Description

### TECHNICAL FIELD

The present invention relates to a gripper for gripping containers adapted to contain a pourable product, preferably a pourable food product.

### BACKGROUND ART

Packaging assemblies for packaging a pourable product, preferably a pourable food product like water, alcoholic beverages, soft drinks, milk, juice or similar, into containers and for treating such containers are known.

Such packaging assemblies comprise a number of treating units, each configured to carry out a specific operation during a treatment process of the aforementioned containers.

For example, in case plastic containers, such as plastic bottles, are to be treated, a packaging assembly typically comprises:
- a blower machine configured to form plastic containers starting from known preforms;
- a filling machine configured to fill the containers with a predetermined amount of pourable product;
- a capping machine configured to apply one cap to each filled container; and
- a labelling machine configured to apply labels onto the filled and capped containers.

In case the containers to be treated are made of glass, such as glass bottles or glass jars, the packaging assemblies do not include any blower machine and comprise, instead of the blower machine, a rinsing unit or rinsing machine, configured to rinse the glass bottles with a rinsing fluid (such as water) generally prior to the filling, capping and labelling operations.

Filling machines are known which typically comprise a conveyor, generally of the rotary type, usually in the form of a carousel rotatable about a vertical axis, a reservoir containing the pourable product, and a plurality of filling devices peripherally carried by the carousel, connected to the reservoir by means of respective circuits or ducts (and through a manifold), and conveyed by the carousel itself along an arc-shaped filling path.

More precisely, the containers to be filled are fed in use to the carousel at an input station thereof, then are conveyed along the arc-shaped filling path, which defines a filling angle with respect to the carousel axis, so as to be filled with the pourable product by the respective filling devices, and then exit the carousel at an output station thereof.

Usually, the known packaging assemblies comprise conveyors arranged between the carousel of the filling machine and the other machines of the assembly.

Typically, at least some of said conveyors are defined by a star wheel rotatable about a central axis parallel to the axis of the carousel, hence preferably vertical.

For example, an inlet star wheel is provided between the rinsing machine or the blower machine and the filling machine, and an outlet star wheel is provided between the filling machine and the capping machine.

Other star wheels can be provided between the various machines of the packaging assembly, e.g. between the capping machine and the labelling machine.

In case the pourable product is to be packaged into containers made of glass, such as glass bottles, each conveyor or star wheel comprises a plurality of receiving seats or sockets configured to receive, each and sequentially, a respective container from an upstream machine or star wheel, to retain such container for a certain angle about the conveyor axis, and to release such container to the downstream machine or star wheel, in particular with the aid of shaped guide rails.

The Applicant has observed that the above configuration presents some drawbacks. In particular, in case a format change is due, there is the need for replacing the star wheels, because the dimension of each seat or socket is fixed. Furthermore, a replacement of external guide rails is also needed.

Solutions are known in which each conveyor has a pair of star wheels, i.e. an upper wheel and a lower wheel coaxially rotatable relative to one another, so as to vary the dimension of each seat or socket.

However, such solution is particularly complicated, cumbersome and costly.

Adaptable grippers are known which are typically used to handle containers made of plastic material.

Such adaptable grippers comprise two arms movable between a closed position and an open position for gripping one container at a time at a neck portion thereof. Each of the two arms comprises a toothed portion configured to mesh directly with the toothed portion of the other arm.

In detail, one of the two arm is "active", meaning that is operatively coupled to an actuator mechanism that, at an appropriate angular position around the wheel axis, drives the movement of the active arm, causing the motion of the "passive" arm via the toothed portions.

However, such configuration presents some drawbacks. In particular, in use, a force or torque is transmitted by the actuator mechanism to the hinge of the active arm. For example, the actuator mechanism can comprise a cam follower, and such force or torque is due to contact between the cam follower and an external cam.

The Applicant has observed that this force or torque, by acting on the hinge, causes premature wear of the hinge of the active arm, reducing the lifespan of the latter. Moreover, such force is transmitted to the passive arm through the toothed coupling, thereby affecting also the passive arm.

### DISCLOSURE OF INVENTION

A gripper according to present description or according to any of the gripper claims, is configured for reducing the wear of the components of the gripper. A gripper according to present description or according to any of the gripper claims, is configured for adapting to different widths of the container, to increase the flexibility of the gripper.

A gripping unit according to present description or according to any of the gripping unit claims, comprises two grippers, each of which is according to present description or according to any of the gripper claims. A gripping unit according to present description or according to any of the gripping unit claims is also configured for adapting to different shapes of the container, to increase the flexibility of the gripping unit.

A conveyor according to present description or according to any of the conveyor claims, comprises a gripper according to present description or according to any of the gripper claims, or a gripping unit according to present description or according to any of the gripping unit claims. The following brief description of the drawings and detailed description of the invention refer to respective example embodiments of said gripper according to present description, gripping unit according to present description, and conveyor according to present description. In the following brief description of the drawings and detailed description of the invention, said embodiment of the gripper will be indicated for simplicity by means of "gripper", said embodiment of the gripping unit will be indicated for simplicity by means of "gripping unit", and said embodiment of the conveyor will be indicated for simplicity by means of "conveyor".

### BRIEF DESCRIPTION OF THE DRAWINGS

The following detailed description of the invention refers to the accompanying drawings, in which:
Figure 1 is a top schematic view, with parts removed for clarity, of part of a packaging assembly for packaging a pourable product into containers and for treating such containers, said assembly comprising at least one conveyor;
Figure 2 shows in perspective a conveyor, with parts removed for clarity; and
Figures 3a-3b are partially sectioned top views of the gripper, with parts removed for clarity, in two different operative conditions, respectively.

### DETAILED DESCRIPTION OF THE INVENTION

The gripper 4 is for gripping a container 2 which is adapted to contain a pourable product.

The gripper 4 comprises a support frame 5. The support frame 5 is fixable to the conveyor 3.

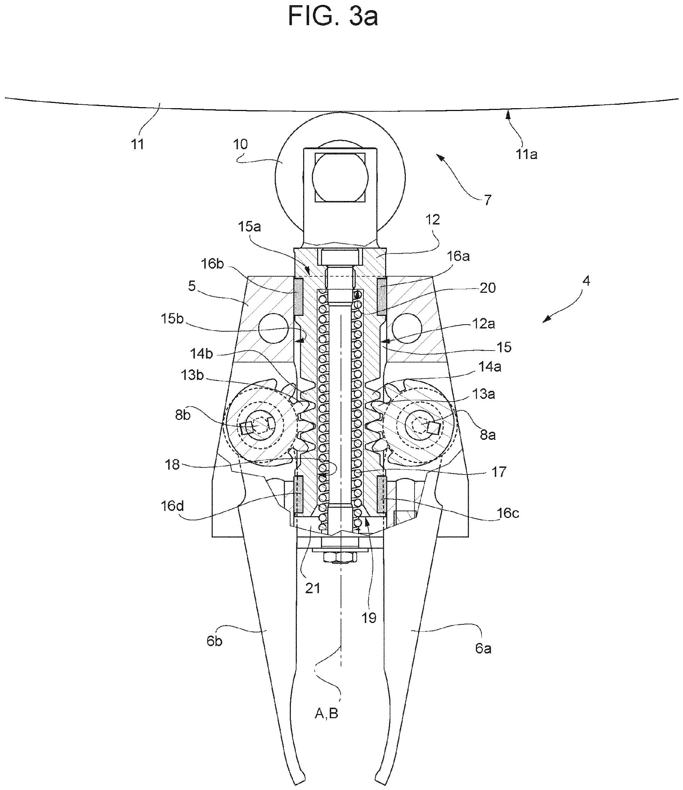

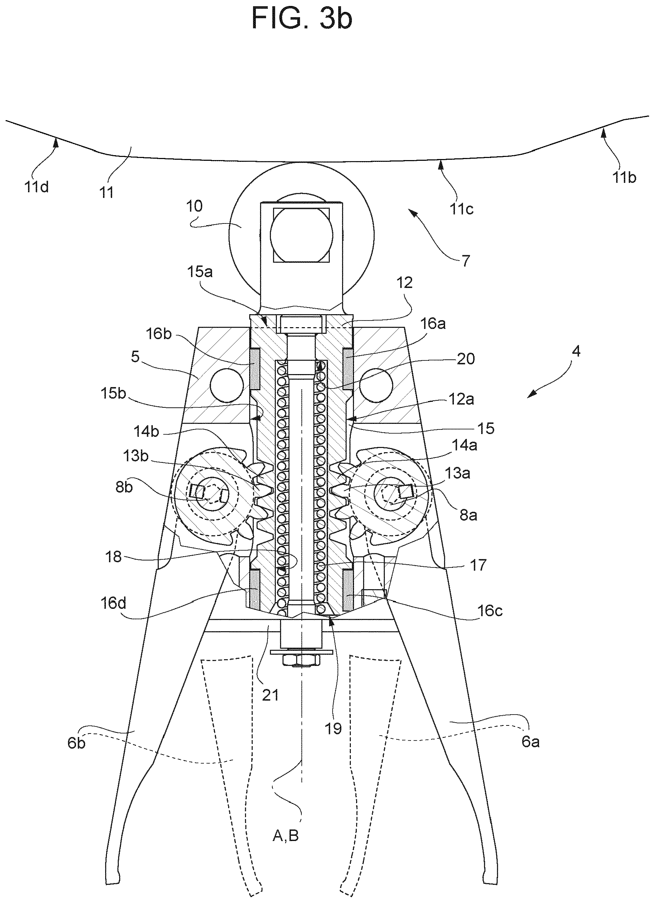

Each gripper 4 comprises at least a first arm 6a and a second arm 6b. The first arm 6a is hinged to the frame 5 by means of a first hinge 8a. The second arm 6b is hinged to the frame 5 by means of a second hinge 8b. By means of the first hinge 8a and the second hinge 8b, the first arm 6a and the second arm 6b can rotate between a closed position, for holding the container, and an open position, for releasing the container. The closed position is shown in Figure 3a. The open position is shown in Figure 3b. The closed position is also shown by dashed lines of Figure 3b.

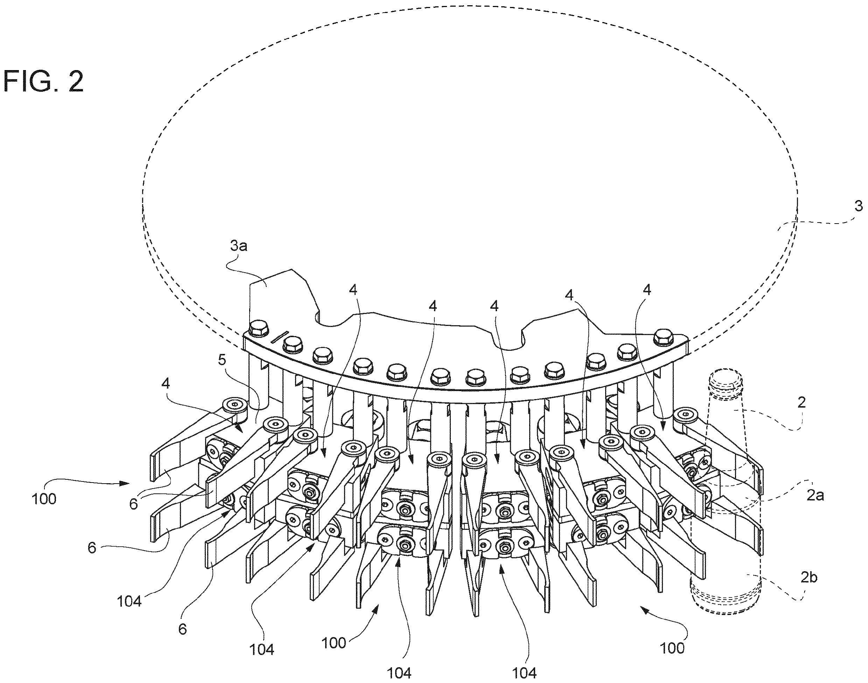

In Figure 2 the arms are indicated both with reference number 6. In Figures 3a and 3b, first arm is indicated with reference number 6a, and second arm is indicated with reference number 6b.

In the following the arms can be indicated with 6a and 6b, or generically with the reference number 6.

The gripper 4 comprises a transmission member 12. The transmission member 12 is movably fitted to the frame 5, to translate between a first axial position and a second axial position. The first position is shown in Figure 3a. The second position is shown in Figure 3b.

The gripper 4 comprises an actuator 7. The actuator 7 is configured for controlling the translation of the transmission member 12 between the first position and the second position. The actuator 7 comprises a cam follower 10. The actuator 7 is configured so that the cam follower 10 cooperates with an external cam 11 to control said translation.

The cam 11 comprises a first sector 11a, a second sector 11b, a third sector 11c, and a fourth sector 11d. The first sector 11a is showed in Figure 3a. The second sector 11b, the third sector 11c, and the fourth sector 11d are showed in Figure 3b. The second sector 11b is interposed between the first sector 11a and the third sector 11c. The fourth sector 11d is interposed between the third sector 11c and the first sector 11a. The second sector 11b is inclined with respect to the first sector 11a and/or with respect to the third sector 11c. The fourth sector 11d is inclined with respect to the first sector 11a and/or with respect to the third sector 11c. The second sector 11b defines a first oblique stretch of the cam 11. The fourth sector 11d defines a second oblique stretch of the cam 11. The cam 10 comprises the first oblique stretch and the second oblique stretch.

During the cooperation between the cam follower 10 and the first sector 11a, or when the cam follower 10 is located in the region of the first sector 11a, the transmission member 12 is kept in the first position. During the cooperation between the cam follower 10 and the third sector 11c, or when the cam follower 10 is located in the region of the third sector 11c, the transmission member 12 is kept in the second position. During the cooperation between the cam follower 10 and the second sector 11b, the transmission member 12 moves from the first position to the second position. During the cooperation between the cam follower 10 and the fourth sector 11d, the transmission member 12 moves from the second position to the first position.

The transmission member 12 is kinematically interposed between the actuator 7 and the arms 6, so that the actuator 7 controls the rotation of the arms 6 by controlling the translation of the transmission member 12. The rotation of the arms 6 is between the closed position and the open position. The first position of the transmission member 12 corresponds to the closed position of the arms 6, and the second position of the transmission member 12 corresponds to the open position of the arms 6.

The cooperation between the cam follower 10 and the second sector 11b causes the actuator 7 to control the translation of the transmission member 12 from the first position to the second position, and therefore causes the actuator 7 to control the rotation of the arms 6 from the closed position to the open position. The cooperation between the cam follower 10 and the fourth sector 11d causes the actuator 7 to control the translation of the transmission member 12 from the second position to the first position, and therefore causes the actuator 7 to control the rotation of the arms 6 from the open position to the closed position.

Due to cooperation between the cam follower 10 and the second sector 11b or the fourth sector 11d of the cam 11, a torque is generated on the gripper 4. This torque is around an axis which is orthogonal to the plane of rotation of the arms 6, which plane of rotation is parallel to plane of Figure 3a or 3b. This torque is acting on the plane of Figure 3a or 3b. The transmission member 12 can contribute to dissipate or absorb this torque, so that the torque is less discharged through the hinges 8a and 8b, or so that the torque is not discharged through the hinges 8a and 8b, to improve the lifespan of the gripper 4. This torque can be considered a bending torque from a structural point of view of the transmission member 12.

The gripper 4 comprises a coupling. By means of the coupling, the transmission member 12 is kinematically interposed between the actuator 7 and the arms 6. The coupling is for coupling the rotation of the arms 6 to the translation of the transmission member 12.

For each arm 6a or 6b, the coupling comprises a respective first coupling portion 13a or 13b, which is integral with the rotation of the respective arm 6a or 6b. For each arm 6a or 6b, the coupling comprises a respective second coupling portion 14a or 14b, which is integral with the translation of the transmission member 12. The coupling is configured so that each first coupling portion 13a or 13b interacts with a respective second coupling portion 14a or 14b, to couple said rotation to said translation.

In this way, the translation of the transmission member is converted in the rotation of the arms 6, with a mechanical transmission which is balanced on the plane of rotation of the arms 6, to avoid or reduce any twisting torque.

The transmission member 12 extends along a longitudinal axis A. The translation of the transmission member 12 is along the longitudinal axis A. The first arm 6a is hinged to the frame 5 by means of a first hinge 8a. The second arm 6b is hinged to the frame 5 by means of a second hinge 8b. Each second coupling portion 14a or 14b is located at the opposite side of said longitudinal axis A, with respect to the other second coupling portion 14b or 14a. Each first coupling portion 13a or 13b is located at the hinge 8a or 8b of the respective arm 6a or 6b. In this way, for each arm 6a or 6b, the gripper 4 is configured for reducing the length of a lever arm between the respective first coupling portion 13a and the respective hinge 8a or 8b. In this way, the stress or deformation of the arms 6a or 6b, which can arise from the coupling with the transmission member 12, is null or at least reduced. Also, the width of the transmission member 12 can be reduced, to reduce the compactness of the gripper 4, thanks to the transmission member 12 having at least two second coupling portion 14a and 14b which are located at opposite sides of the transmission member 12.

The coupling is a mechanical contact coupling, so that said interaction is a mechanical contact interaction. Each coupling portion comprises a respective teeth or toothing.

The frame 5 defines a channel 15 for guiding said translation of the transmission member 12 between the first position and the second position. The gripper 4 comprises a first sliding support. The first sliding support is interposed between an inner surface 15a of the channel 15 and an outer surface 12a of the transmission member 12, so that said translation corresponds to the contact sliding of the first support on said inner surface 15a. The first sliding support can be a ring shaped body. The first sliding support can be a first sliding ring or a first sliding bearing. In Figures 3a and 3b, two opposite sections of the first support are indicated with 16a and 16b.

The first sliding support contributes to dissipate or absorb the torque generated by the cooperation between the cam follower 10 and the inclined second sector 11b or fourth sector 11d of the cam 11. In particular, the torque is a bending torque acting on the transmission member 12, and is discharged by means of the abutment between the first support and the inner surface 15a of the channel 15. In this way the wear of the transmission member 12 is reduced. That abutment is transversal with respect to the longitudinal axis A.

The transmission member 12 can present a cylindrical configuration extending along the longitudinal axis A. In this, case, the first support is fitted around the transmission member 12, by being arranged around the longitudinal axis A.

The gripper 4 comprises a second sliding support. The second sliding support is interposed between the inner surface 15a and the outer surface 12a, so that said translation corresponds to the contact sliding of the second support on said inner surface 15a. The second support and the first support are spaced apart from each other, with respect to said longitudinal axis A. The presence of at least two sliding support, which are spaced apart from each other along the axis A, helps in reducing the level of stress of the transmission member 12, to better absorb the torque generated by the cooperation between the cam follower and the inclined second sector 11b or fourth sector 11d of the cam 11.

The second sliding support can be a ring shaped body. The second sliding support can be a second sliding ring or a second sliding bearing. In Figures 3a and 3b, two opposite sections of the second support are indicated with 16c and 16d. Also the second support can be fitted around the transmission member 12, by being arranged around the longitudinal axis A.

Each sliding support is made at least partially by means of a thermoplastic or plastic material.

The actuator 7 is configured for driving the translation of the transmission member 12 from the first position to the second position.

The transmission member 12 is kinematically interposed between the actuator 7 and the arms 6, so that the actuator 7 drives the rotation of the arms 6 from the closed position to the open position, by driving the translation of the transmission member 12 from the first position to the second position.

The cooperation between the cam follower 10 and the second sector 11b causes the actuator 7 to drive the translation of the transmission member 12 from the first position to the second position, and therefore causes the actuator 7 to drive the rotation of the arms 6 from the closed position to the open position. In particular the transmission member 12, also with help of the sliding supports, especially during cooperation of cam follower 10 with second sector 11b, at least contribute to dissipate or absorb the torque arising from the cooperation between the cam follower 10 and the second sector 11b.

The gripper 4 comprises a spring 17. The spring 17 is biasing the transmission member 12 towards the first position, and therefore the arms 6 towards the closed position. In this way the cam 11 can be configured so that the second sector 11b pushes the transmission member 12 to open the gripper 4, so that the cam 11 is more simple to manufacture. Also, the extension of the first sector 11a can be reduced, or the first sector 11a can be eliminated, because the cam 11 can be substantially used only to open the gripper 4. Therefore the first sector 11a can be absent.

In particular, the cooperation between the cam follower 10 and the second sector 11b causes the actuator 7 to drive the translation of the transmission member 12 from the first position to the second position, and therefore causes the actuator 7 to drive the rotation of the arms 6 from the closed position to the open position, against the action of the spring 17.

The spring 17 is mechanically interposed between the transmission member 12 and the frame 5. In this way, the force exerted by the spring 17 does not act on the hinges 8a or 8b, to further reduce the wear.

The transmission member 12 has an axial inner cavity 18. The cavity 18 extends from an axial opening 19 thereof, up to an internal axial abutment 20 of the transmission member 12. The axial opening 19 is facing the frame 5.

The spring 17 cooperates with the frame 5 through said axial opening 19, and cooperates with the transmission member 12 through said axial abutment 20.

In this way, the longitudinal footprint of the group comprising the transmission member 12 and the spring 17, is reduced along the longitudinal axis A, to increase the space which is available for the container.

The channel 15 is configured for guiding the translation of the transmission member 12 along the longitudinal axis A. The channel 15 defines a channel axis B which is coincident with the longitudinal axis A.

In detail, the spring 17 is arranged in the cavity 18 and is interposed between the abutment 20 and a wall 21 of the frame 5, such wall 21 facing the axial opening 19.

In other words, the spring 17 cooperates with the frame 5 by contacting wall 21.

The conveyor 3 comprises a star wheel 3 which is rotatable about a central axis.

The conveyor 3 can comprise a plurality of grippers 4.

The gripping unit 100 is for gripping a container 2 which is adapted to contain a pourable product.

The gripping unit 100 comprises a first gripper 4. The first gripper 4 is for gripping a first portion 2a of the container 2. The gripping unit 100 comprises a second gripper 104. The second gripper 104 is for gripping a second portion 2b of the container 2. The first portion 2a and the second portion 2b of the container 2 are at different heights with respect to the longitudinal extension of the container 2.

The conveyor 3 can comprise a plurality of gripping units 100.

In the conveyor 3, the frame 5 of each gripper 4 or 104 is fixed to a peripheral portion 3a of the star wheel 3. The conveyor 3 is configured so that, for each gripping unit 100, the first gripper 4 and the second gripper 104 are spaced apart from each other, with respect to a vertical direction. The vertical direction is operatively parallel to the longitudinal extension of the gripped container 2. The vertical direction is parallel to the central axis, so that the first gripper 4 and the second gripper 104 are spaced apart from each other with respect to a direction defined by the central axis.

In this way each gripping unit 100 is configured for automatically adapting to different shapes of the container 2 to be gripped.

The conveyor 3 comprises the cam 11. The conveyor 3 is configured so that the rotation of the star wheel 3 corresponds to the cooperation of the cam follower 10 of each gripper 4 or 104 with said cam 11. In particular, the conveyor 3 is configured so that the rotation of the star wheel corresponds to the cam follower 10 cooperating sequentially with the first oblique stretch 11b, the third sector 11c, and the second oblique stretch 11d. If the cam 11 comprises the first sector 11a, the conveyor 3 is configured so that the rotation of the star wheel corresponds to the cam follower 10 cooperating sequentially with the first sector 11a, the first oblique stretch 11b, the third sector 11c, and the second oblique stretch 11d.

The container 2 is a glass bottle or another type of container. The gripper 4 is specially adapted for gripping a glass bottle.

The cooperation between the cam follower 10 and the cam 11 can be for example a mechanical contact cooperation or a magnetic cooperation.

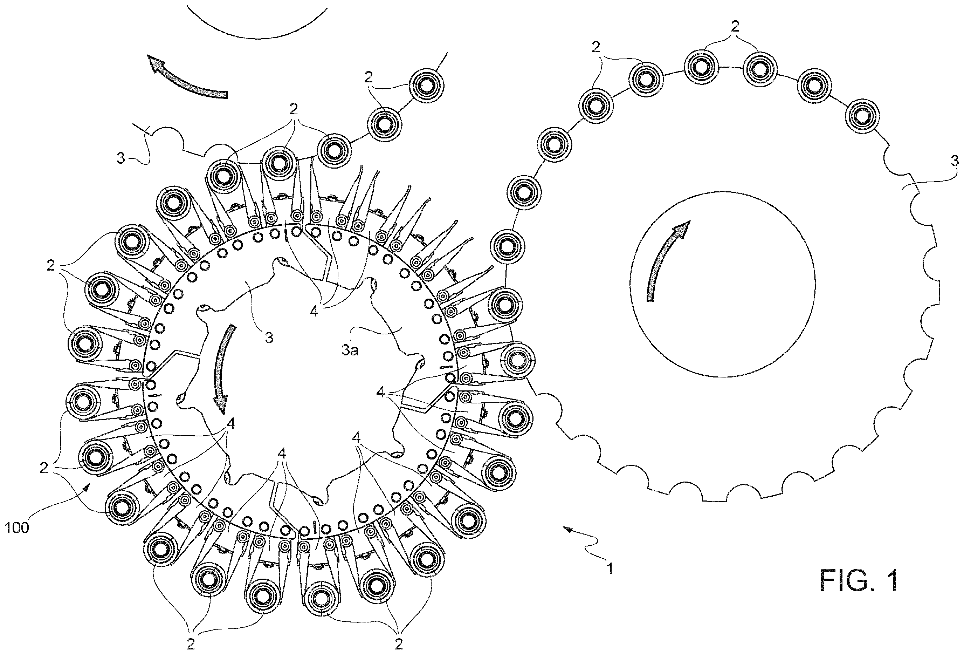

With reference to Figure 1, number 1 indicates as a whole part of a packaging assembly. The assembly is for packaging a pourable product by means of containers 2, preferably a pourable food product such as water, milk, wine, juice, soft drinks, beer, oil, or the like.

In the embodiment shown, containers 2 are defined by bottles made of glass.

Alternatively, containers 2 may be defined by glass jars or by bottles or flacons made of plastic material, e.g. PET.

Preferably, packaging assembly 1 comprises:
- a filling machine (known per se and not shown) configured for filling the containers 2 with the pourable product;
- a capping machine configured for capping the filled containers 2;
- a labelling machine configured for labelling the filled or capped containers 2.

In case the containers 2 to be treated are made of plastic material, packaging assembly 1 further comprises a blower machine, for forming plastic containers starting from known preforms.

In the present case, being the containers 2 made of glass, packaging assembly 1 comprises, instead of the blower machine, a washing machine (known per se and not shown), which is configured for washing the glass containers 2 with a washing fluid (such as water), prior to the filling thereof.

Packaging assembly 1 further comprises a plurality of conveyors 3, which are operatively interposed between the machines of the assembly 1.

In detail, at least one conveyor 3 is provided between the filling machine and the capping machine, at least one conveyor 3 is provided between the capping machine and the labelling machine, and at least one conveyor 3 is provided between the washing machine and the filling machine.

With reference to Figures 1 and 2, each conveyor 3 is defined by a star wheel, which is rotatable about a central axis. The axis is preferably vertical.

For example, an inlet star wheel is provided between the washing machine and the filling machine, and an outlet star wheel is provided between the filling machine and the capping machine.

The advantages of the gripper 4 according to the present invention will be clear from the foregoing description.

In particular, the cooperation between the cam follower 10 and the inclined second sector 11b or fourth sector 11d of the cam 11 can cause a torque on the plane of rotation of the arms 6a and 6b. The Applicant has observed that thanks to the presence of the transmission member 12 which can slide within the channel 15, and by means of the coupling between the transmission member 12 and the arms 6a and 6b, the torque can be discharged through the transmission member 12 instead of through the first hinge 8a and/or the second hinge 8b. In this way, a big reduction of the wear of the components of the gripper 4 is obtained.

Moreover, the sliding support 16a-16b or 16c-16d can help the transmission member 12 to transmit said torque to the frame 5.

The gripper 4 is configured so that the closed position of the arms 6a and 6b can also automatically adapt to different widths of the container 2 to be gripped, to improve the flexibility of the gripper 4 and/or of the conveyor 3 with respect to the width of the container 2.

Also, the gripping unit 100 is configured for automatically adapting to different shapes of the container to be gripper, in particular in relation to different longitudinal profile of the container. In this way, there is an improvement of the flexibility of the gripping unit 100 and/or of the conveyor 3 with respect to the shape of the container 2 to be gripped.

Clearly, changes may be made to gripper 4 or gripping unit 100 or conveyor 3 as described herein without, however, departing from the scope of protection as defined in the accompanying claims.

## Claims

1. Gripper (4) for gripping at least one container (2) which is adapted to contain a pourable product, the gripper (4) comprising:
- a support frame (5), which is fixable to a conveyor (3) of a packaging assembly (1), the assembly being for packaging the pourable product by means of containers (2) ;
- a first arm (6a) and a second arm (6b), which are hinged to the frame (5), to rotate between a closed position, for holding the container (2), and an open position, for releasing the container (2);
- a transmission member (12), the transmission member (12) being movably fitted to the frame (5), to translate between a first axial position and a second axial position;
- an actuator (7), which is configured for controlling the translation of the transmission member (12) between said first position and said second position;
wherein the transmission member (12) is kinematically interposed between the actuator (7) and the arms (6a, 6b), so that the actuator (7) controls the rotation of the arms (6a, 6b) between the closed position and the open position, by controlling the translation of the transmission member (12) between the first position and the second position, the first position of the transmission member (12) corresponding to the closed position of the arms (6a, 6b), and the second position of the transmission member (12) corresponding to the open position of the arms (6a, 6b).

2. Gripper (4) as claimed in Claim 1, comprising:
- a coupling, by means of which the transmission member (12) is kinematically interposed between the actuator (7) and the arms (6a, 6b);
the coupling comprising, for each arm (6a; 6b), a respective first coupling portion (13a; 13b), which is integral with the rotation of the respective arm (6a; 6b), and a respective second coupling portion (14a; 14b), which is integral with the translation of the transmission member (12), each first portion (13a; 13b) interacting with a respective second portion (14a; 14b), to couple the rotation of the respective arm (6a; 6b) to said translation.

3. Gripper (4) according to Claim 2, wherein:
- the transmission member (12) extends along a longitudinal axis (A), the translation of the transmission member (12) being along said longitudinal axis (A);
- the arms (6a, 6b) are hinged to the frame (5) by means of respective hinges (8a, 8b);
- each second coupling portion (14a; 14b) is located at the opposite side of said longitudinal axis (A), with respect to the other second coupling portion (14b; 14a), and each first coupling portion (13a; 13b) is located at the hinge (8a; 8b) of the respective arm (6a; 6b).

4. Gripper (4) according to Claim 2 or 3, wherein the coupling is a mechanical contact coupling, so that said interaction is a mechanical contact interaction.

5. Gripper (4) according to any of the previous Claims, wherein:
- the frame (5) defines a channel (15) for guiding said translation;
- the gripper (4) comprises a first sliding support (16a, 16b), which is interposed between an inner surface (15a) of the channel (15) and an outer surface (12a) of the transmission member (12), so that said translation corresponds to the contact sliding of the first support (16a, 16b) on said inner surface (15a).

6. Gripper (4) according to Claims 3 and 5, comprising a second sliding support (16c, 16d), which is interposed between the inner surface (15a) of the channel (15) and the outer surface (12a) of the transmission member (12), so that said translation corresponds to the contact sliding of the second support (16c, 16d) on said inner surface (15a), the second support (16c, 16d) and the first support (16a, 16b) being spaced apart from each other, with respect to said longitudinal axis (A).

7. Gripper according to Claim 5 or 6, wherein each sliding support is made at least partially by means of a thermoplastic or plastic material.

8. Gripper (4) according to any of the previous Claims, wherein:
- the actuator (7) is configured for driving the translation of the transmission member (12) from the first position to the second position;
wherein the transmission member (12) is kinematically interposed between the actuator (7) and the arms (6a, 6b), so that the actuator (7) drives the rotation of the arms (6a, 6b) from the closed position to the open position, by driving the translation of the transmission member (12) from the first position to the second position.

9. Gripper (4) according to Claim 8, comprising a spring (17) biasing the transmission member (12) towards the first position, and therefore the arms (6a, 6b) towards the closed position.

10. Gripper (4) according to Claim 9, wherein the spring (17) is mechanically interposed between the transmission member (12) and the frame (5).

11. Gripper as claimed in claim 9 or 10, wherein the transmission member (12) has an axial inner cavity (18) extending from an axial opening (19) thereof, the axial opening (19) facing the frame (5, 21), up to an internal axial abutment (20) of the transmission member (12),
the spring (17) cooperating with the frame (5, 21) through said axial opening (19), and cooperating with the transmission member (12) through said axial abutment (20).

12. Gripper as claimed in any of the previous Claims, wherein the actuator (7) comprises a cam follower (10) and is configured so that the cam follower (10) cooperates with an external cam (11) to control said translation between the first position and the second position.

13. Gripping unit (100) for gripping containers (2) adapted to contain a pourable product comprising:
- a first gripper (4) for gripping a first portion (2a) of the container (2);
- a second gripper (104) for gripping a second portion (2b) of the container (2), the first portion (2a) and the second portion (2b) being at different heights with respect to the longitudinal extension of the gripped container (2);
wherein the first gripper (4) and the second gripper (104) are spaced apart from each other with respect to a vertical direction, the vertical direction being operatively parallel to said longitudinal extension;
each gripper (4, 104) of the gripping unit (100) being according to any of the previous Claims.

14. Conveyor (3) for a packaging assembly (1), the assembly (1) being for packaging a pourable product by means of containers (2), the conveyor (3) comprising a star wheel (3) which is rotatable about a central axis, and:
- a plurality of grippers (4) each of which is according to any of Claims 1 to 12, the frame (5) of each gripper (4) being fixed to a peripheral portion (3a) of the star wheel (3); or
- a plurality of gripping units (100) each of which is according to Claim 13, the frame (5) of each gripper (1; 104) being fixed to a peripheral portion (3a) of the star wheel (3), the conveyor (3) being configured so that, for each gripping unit (100), the vertical direction is parallel to the central axis.

15. Conveyor (3) according to Claim 14, wherein:
- each gripper (1; 104) is according to Claim 12;
- the conveyor comprises a cam (11) and is configured so that the rotation of the star wheel (3) corresponds to the cooperation of the cam follower (10 of each gripper (1; 104) with said cam (11).
